# EUROPEAN PATENT SPECIFICATION

(11) **EP 0 277 838 B1**
(45) Date of publication and mention of the grant of the patent: **03.11.1993**
(21) Application number: 88300975.5
(22) Date of filing: 05.02.1988
(51) Int. Cl.: G01N 21/41

(54) **Apparatus for determining the index profile of an optical fibre**
Vorrichtung zur Bestimmung des Indexprofils einer optischen Faser
Appareil pour déterminer le profil d'indice d'une fibre optique

(30) Priority: 05.02.1987 GB 8702543
(43) Date of publication of application: 10.08.1988
(73) Proprietor: YORK TECHNOLOGY LIMITED, Chandler's Ford Hampshire S05 3DG (GB)
(72) Inventor: Channon, Nicholas Douglas, Salisbury - Wiltshire SP5 2HU (GB); Svendsen, David Alan, Winchester - Hampshire (GB); Hallam, Andrew Geoffrey, Bishops Waltham - Hampshire SO3 1BY (GB); Kluth, Erhard Lothar Edgar, Alresford - Hampshire SO24 9DD (GB)
(74) Representative: Fenlon, Christine Lesley

(56) References cited:
- EP-A- 0 111 441
- GB-A- 2 098 352
- APPLIED OPTICS, vol. 20, no. 19, October 1981, pages 3415-3421, New York, US; M. YOUNG: "Optical fiber index profiles by the refracted-ray method (refracted near-field scanning)"
- APPLIED OPTICS, vol. 20, no. 9, May 1981, pages 1645-1651, Optical Society of America, New York, US; M.J. SAUNDERS: "Optical fiber profiles using the refracted near-field technique: a comparison with other methods"
- ELECTRONICS LETTERS, vol. 19, no. 15, July 1983, pages 580-582, London, GB; T. MÜLLER: "Resolution improvement in refracted near-field index measurement by a lens-shaped liquid cell"
- REPORT OF THE EUROPEAN CONFERENCE ON OPTICAL COMMUNICATION ECOC-8, Cannes, 21st - 24th September 1982, pages 193-196; W.J. STEWART et al.: "High resolution optical fibre index profiling"

## Description

The present invention relates to an apparatus for the examination of the refractive index profile of an optical fibre.

Optical fibres used in the transmission of data are manufactured with a defined refractive index profile across the diameter of the fibre. A knowledge of the index profile is therefore important in assessing the transmission performance of an optical fibre.

In the prior art, such as GB-2098352, the fibre to be profiled is mounted in a cell of reflective elliptical internal form, which is filled with a fluid having a similar or greater index than that of silica, known as index-matching fluid. The top of the cell is closed with a concave window of transparent material. The fibre to be profiled is mounted in a series of reduction tubes and positioned inside the cell along the major axis of the ellipse such that the end of the fibre is at one of the foci of the ellipse. The end of the fibre is scanned by a small spot of focused laser light, either by translating the cell as a whole across the optical axis or by optically scanning the light beam itself. The light is refracted by the index-matching fluid and the fibre in the cell and is reflected and focused by the elliptical surface onto a detector positioned above the cell. An iris diaphragm is positioned between the cell and the detector and serves to block light of low numerical aperture corresponding to 'leaky modes' within the fibre and is essential for the correct operation of the profiling technique.

The main disadvantages of this prior art are firstly, that the light collection system is not stationary with respect to the focused light spot which causes a distortion of the effective blocking aperture as seen by the fibre end, and a consequent distortion of the index profile. Secondly, the amount of reflection from the elliptical mirror surface is both angle and polarisation dependent resulting in further distortion of the profile. Thirdly, in the event of leakage, the large volume of fluid in the cell can result in severe damage to the apparatus. Fourthly, the cleaning of the cell and preparation of a fibre for profiling is time-consuming and results in the apparatus remaining temporarily idle.

Other prior art apparatus are disclosed in EP-A-0111441 and APPLIED OPTICS, Vol 20, No. 19, October 1981, p. 3415-3421.

According to the present invention there is provided an apparatus for determining the index profile of an optical fibre comprising a light source and a light detector, an optical system for focusing a light beam from the light source, a means for holding an end surface of an optical fibre perpendicular to the light beam and at the focus thereof, the end surface of the optical fibre being within a cell, a lens element between the cell and the light detector, a stray light blocking means positioned between the cell and the light detector and means for enabling the end surface of the optical fibre to be scanned across the focus of the light beam,
characterised in that the lens element is a toroidal lens element of cylindrical form having a clearance hole along its axis, the light beam during use passing through the toroidal lens element by the process of total internal reflection at its outside cylindrical convex surface.

According to another aspect of the present invention there is provided an apparatus for determining the index profile of an optical fibre comprising a light source and a light detector, an optical system for focusing a light beam from the light source, a means for holding an end surface of an optical fibre perpendicular to the light beam and at the focus thereof, the end surface of the optical fibre being within a cell, a lens element between the cell and the light detector, a stray light blocking means positioned between the cell and the light detector and means for enabling the end surface of the optical fibre to be scanned across the focus of the light beam,
characterised in that the lens element is a toroidal lens element of cylindrical form having a clearance hole along its axis and a reflective coating on its outside cylindrical convex surface.

A specific embodiment of the present invention is now described by way of example with reference to the accompanying drawings in which:-
Figure 1 shows a schematic side view of the apparatus of the specific embodiment of the present invention;
Figure 2 is an enlarged schematic side view of the cell of the apparatus of figure 1; and
Figure 3 is an enlarged side view of the lens element of the apparatus of figure 1.

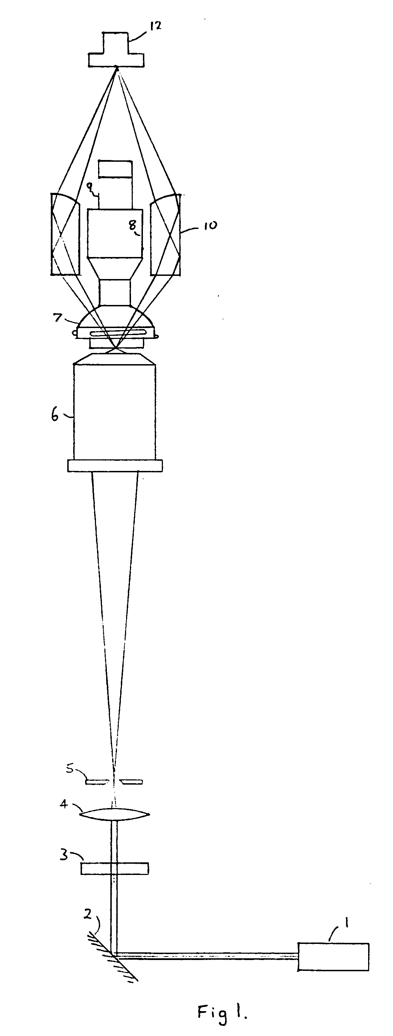

With reference to Figure 1, a fibre 11 to be profiled is mounted in a precision ferrule, cleaved and inserted into a small fluid-filled hemispherical cell 7. The cell 7 is scanned in the plane of a focussed spot of laser light. Light refracted by the cell 7 is collected by a toroidal lens element and focused onto a detector 12.

A detailed description of individual components of the apparatus is as follows:

### a) Cell

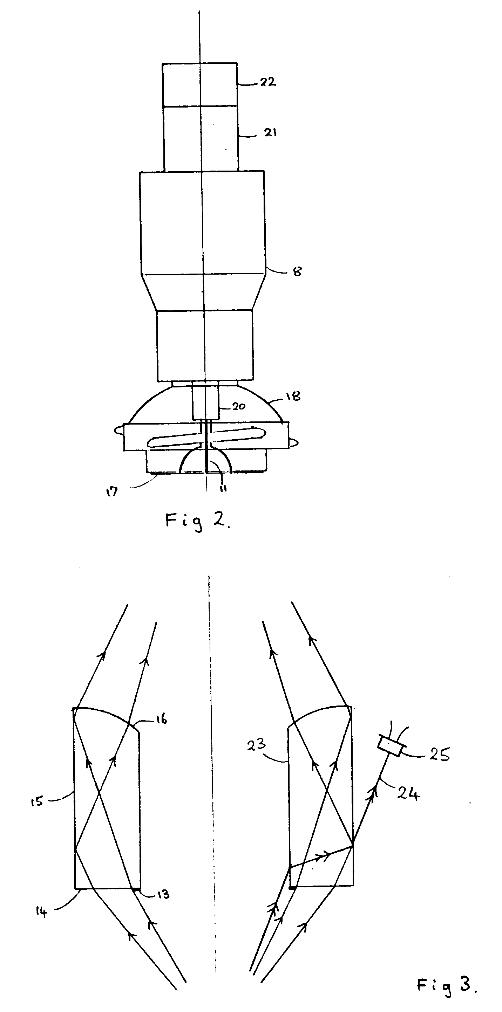

As shown in Figure 2, the cell 7 is of hemispherical form and is manufactured from a transparent material such as plastic or glass. The lower side of the cell 7 is closed by a thin transparent window 17, such as glass coverslip. To the top of the cell 7 is attached a funnel 8 which is usually made of opaque material. The cell is filled with index-matching fluid injected through the funnel. The fibre 11 to be profiled is mounted in a precision ferrule 20, which forms part of a larger holder 21, and cleaved normally to its axis. The fibre 11 and holder assembly 9 are inserted into the cell 7 through funnel 9, such that the end section of the fibre 11 is situated at the centre of curvature of the cell 7, the purpose of which is to minimise spherical aberration caused by refraction through the cell 7. In this manner the cleaved end of the fibre is protected from contamination during insertion into the cell 7.

The funnel 8 serves to guide the ferrule into the cell 7, to provide a reservoir for the fluid and to stop unwanted light from reaching the detector 12. The free end of the fibre 11 is broken off and the cap 22 put in place to prevent unwanted light from reaching the detector 12.

The cell 7 is scanned across a small spot of light formed by a high numerical aperture objective 6. The beam of light enters the cell 7 through the window 17 and is refracted by the fibre 11 and the matching fluid in the cell 7, and exits the cell 7 through the curved surface 18. The hemispherical cell 7 serves to reduce the numerical aperture of the beam in the fashion of a lens element 10 thus facilitating subsequent light collection. The cell 7 has a screw or bayonet fitting for accurate location in the apparatus.

### b) Toroidal Lens

A toroidal lens element 10 forms the second part of the light collection system, and is shown in Figure 3. The element 10 is of a cylindrical form having a clearance hole along the axis to accommodate the cell 7 and holder. The upper and lower surfaces of the element 10 are suitably curved to collect and focus an annulus of light onto a detector 12.

After refraction through the cell 7, light enters the toroidal element 10 by refraction at the lower surface 14. It is then reflected at the cylindrical surface 15 which in this particular embodiment is by the process of total internal reflection. Alternatively a reflective coating may be applied to this surface. The upper surface 16 is of a curved form and focuses the light onto a point on the axis of and above the element 10 where a detector 12 is positioned. The blocking aperture may be an iris diaphragm positioned between the element 10 and the detector 12, or alternatively, an annular ring 13 may be fitted to or deposited on the lower surface of the element 10 to provide a means of blocking light of low numerical aperture.

### c) The Light source and optical system

The light source 1 is usually a linearly polarised helium-neon laser. The quarter waveplate 3 converts the state of polarisation into circular and lens 4 expands the beam to overfill the high numerical aperture objective 6, which focuses the beam to a small spot on the end of the fibre. Spatial filter 5 is positioned at the focus of lens 4 and serves to improve the quality of the light beam.

Various advantages of this embodiment of the present invention are as follows:
1) The discrete hemispherical cell is very small and therefore holds much less index-matching fluid than the elliptical cell of the prior art. Cleaning is therefore facilitated and the risk of damage to the apparatus from fluid spillage is reduced.
2) Cells and fibres can be prepared away from the apparatus which increases the efficiency of use of the apparatus in a production environment.
3) The cell is of low mass, thus permitting high scan rates.
4) The hemispherical shape of the cell serves to reduce the numerical aperture of the refracted light beam and therefore acts as the first element in a high numerical aperture light collection system.
5) The hemispherical shape of the cell causes no spherical aberration and thus maintains the effective numerical aperture of the blocking ring as seen by the end of the fibre. Also, the exit angle of the light beam is dependent on refractive index and is useful in reducing other effects and in calibration of the apparatus.
6) In contrast to the elliptical cell technique, the light collection system is stationary with respect to the focussed light spot, resulting in less distortion of the index profile.
7) The toroidal lens element is a very efficient reflector, compared to the reflection from metallic surfaces such as the elliptical mirror of the prior art, due to the nature of total internal reflection.
8) The efficiency of reflection is independent of the varying angle of incidence caused by the index profile of the fibre and is also independent of the state of polarisation of the light beam, both of which are not the case for a metallic reflector.
9) The blocking aperture, which is a critical element in the profiling technique, is generally sited on the lower surface of the toroidal element and therefore blocks light of low numerical aperture before any reflections of the light beam take place. This relaxes the tolerance on the form and quality of the reflecting element; elliptical surfaces are difficult to manufacture accurately.
10) A means of aligning the fibre axis with the optical axis of the apparatus, prior to performing a refractive index profile measurement, can be implemented, if required, utilising another property of the toroidal lens. The toroidal lens material may be chosen such that light rays which have a numerical aperture less than the blocking numerical aperture and consequently strike the inner cylindrical surface 23, will refract through the lens in a transverse direction. Figure 3 shows a refracted ray 24. (If the toroidal lens is coated with a reflective material which is totally opaque, a window will be required in the reflective coating.) Positional information of the fibre may be obtained by offsetting the fibre and cell in one direction and scanning in the orthogonal direction.
   The shadow cast by the fibre is detected by a photodetector 25 which in one embodiment consists of a fibre link to a remote photodetector. The process is performed for both orthogonal axes.
   Coordinate information on the fibre can then be deduced and the fibre may be positioned on the optical axis.
11) The toroidal lens may be formed inexpensively in plastic or glass by the process of moulding.

It will of course be understood that the present invention has been described above purely by way of example and that modifications of detail can be made within the scope of the invention as defined in the claims.

## Claims

1. An apparatus for determining the index profile of an optical fibre (11) comprising a light source (1) and a light detector (12), an optical system (3,4,5,6) for focusing a light beam from the light source (1), a means (20) for holding an end surface of an optical fibre (11) perpendicular to the light beam and at the focus thereof, the end surface of the optical fibre (11) being within a cell (7), a lens element (10) between the cell (7) and the light detector (12), a stray light blocking means (13) positioned between the cell (7) and the light detector (12) and means for enabling the end surface of the optical fibre (11) to be scanned across the focus of the light beam,
characterised in that the lens element is a toroidal lens element (10) of cylindrical form having a clearance hole along its axis, the light beam during use passing through the toroidal lens element (10) by the process of total internal reflection at its outside cylindrical convex surface (15).

2. An apparatus for determining the index profile of an optical fibre (11) comprising a light source (1) and a light detector (12), an optical system (3,4,5,6) for focusing a light beam from the light source (1), a means (20) for holding an end surface of an optical fibre (11) perpendicular to the light beam and at the focus thereof, the end surface of the optical fibre (11) being within a cell (7), a lens element (10) between the cell (7) and the light detector (12), a stray light blocking means (13) positioned between the cell (7) and the light detector (12) and means for enabling the end surface of the optical fibre (11) to be scanned across the focus of the light beam,
characterised in that the lens element is a toroidal lens element (10) of cylindrical form having a clearance hole along its axis and a reflective coating on its outside cylindrical convex surface (15).

3. An apparatus according to Claim 2 wherein the toroidal lens element (10) has one or more windows in its reflective coating.

4. An apparatus according to Claim 1, Claim 2 or Claim 3, wherein the toroidal lens element (10) has upper (16) and lower (14) surfaces which are suitably curved to collect and focus an annulus of light onto the detector (12).

5. An apparatus according to any preceding claim, wherein the cell (7) is substantially hemispherical.

6. An apparatus according to any preceding claim, wherein the cell (7) contains index-matching fluid.

7. An apparatus according to any preceding claim wherein the underside of the cell (7) is closed by a thin transparent window (17).

8. An apparatus according to any preceding claim, wherein the holding means (20) includes a precision ferrule which may be inserted into the cell (7) through a funnel (8).

9. An apparatus according to any preceding claim, wherein the blocking means (13) is an iris diaphragm between the lens element (10) and the light detector.

10. An apparatus according to any one of Claims 1 to 8 wherein the blocking means (13) is an annular ring on the lower surface (14) of the lens element (10).

11. An apparatus according to any preceding claim wherein the light source (1) is a laser.

12. A method of aligning the axis of the optical fibre with the optical axis of an apparatus according to any preceding claim wherein light refracted by the optical fibre (11), which refracts through the toroidal lens element (10) from the clearance hole to and through the outside cylindrical convex surface (15) of the toroidal lens element (10), is detected by detecting means (25) in more than one direction.

## Patentansprüche

1. Einrichtung zur Bestimmung des Brechungszahlprofils einer Lichtleitfaser (11) mit einer Lichtquelle (1) und einem Lichtdetektor (12), einem optischen System (3, 4, 5, 6) zur Fokussierung eines Lichtstrahls von der Lichtquelle (1), einem Mittel (20) zum Halten einer Endfläche einer Lichtleitfaser (11) senkrecht zum Lichtstrahl und an dessen Brennpunkt, wobei sich die Endfläche der Lichtleitfaser (11) innerhalb einer Zelle (7) befindet, einem Linsenelement (10) zwischen der Zelle (7) und dem Lichtdetektor (12), einem zwischen der Zelle (7) und dem Lichtdetektor (12) angebrachten Streulicht-Sperrmittel (13) und Mitteln, um zu ermöglichen, daß die Endfläche der Lichtleitfaser (11) über den Brennpunkt des Lichtstrahls hinweg abgetastet wird, dadurch gekennzeichnet, daß das Linsenelement ein ringförmiges zylinderförmiges Linsenelement (10) mit einem Freiraumloch entlang seiner Achse ist, wobei der Lichtstrahl im Gebrauch das ringförmige Linsenelement (10) mittels des Vorgangs totaler Innenreflexion an seiner zylindrischen konvexen Außenfläche (15) durchläuft.

2. Einrichtung zur Bestimmung des Brechungszahlprofils einer Lichtleitfaser (11) mit einer Lichtquelle (1) und einem Lichtdetektor (12), einem optischen System (3, 4, 5, 6) zur Fokussierung eines Lichtstrahls von der Lichtquelle (1), einem Mittel (20) zum Halten einer Endfläche einer Lichtleitfaser (11) senkrecht zum Lichtstrahl und an dessen Brennpunkt, wobei sich die Endfläche der Lichtleitfaser (11) innerhalb einer Zelle (7) befindet, einem Linsenelement (10) zwischen der Zelle (7) und dem Lichtdetektor (12), einem zwischen der Zelle (7) und dem Lichtdetektor (12) angebrachten Streulicht-Sperrmittel (13) und Mitteln, um zu ermöglichen, daß die Endfläche der Lichtleitfaser (11) über den Brennpunkt des Lichtstrahls hinweg abgetastet wird, dadurch gekennzeichnet, daß das Linsenelement ein ringförmiges zylinderförmiges Linsenelement (10) mit einem Freiraumloch entlang seiner Achse und einer reflektiven Beschichtung an seiner zylindrischen konvexen Außenfläche (15) ist.

3. Einrichtung nach Anspruch 2, dadurch gekennzeichnet, daß das ringförmige Linsenelement (10) ein oder mehrere Fenster in seiner reflektiven Beschichtung aufweist.

4. Einrichtung nach Anspruch 1, 2 oder 3, dadurch gekennzeichnet, daß das ringförmige Linsenelement (10) obere (16) und untere (14) Oberflächen besitzt, die entsprechend gekrümmt sind, um einen Lichtring einzusammeln und auf den Detektor (12) zu fokussieren.

5. Einrichtung nach einem der vorhergehenden Ansprüche, dadurch gekennzeichnet, daß die Zelle (7) im wesentlichen halbkugelförmig ist.

6. Einrichtung nach einem der vorhergehenden Ansprüche, dadurch gekennzeichnet, daß die Zelle (7) Brechungszahlanpassungsflüssigkeit enthält.

7. Einrichtung nach einem der vorhergehenden Ansprüche, dadurch gekennzeichnet, daß die Unterseite der Zelle (7) durch ein dünnes transparentes Fenster (17) verschlossen ist.

8. Einrichtung nach einem der vorhergehenden Ansprüche, dadurch gekennzeichnet, daß das Halterungsmittel (20) eine Präzisionsquetschhülse umfaßt, die durch einen Trichter (8) in die Zelle (7) eingebracht werden kann.

9. Einrichtung nach einem der vorhergehenden Ansprüche, dadurch gekennzeichnet, daß das Sperrmittel (13) eine Irisblende zwischen dem Linsenelement (10) und dem Lichtdetektor ist.

10. Einrichtung nach einem der Ansprüche 1 bis 8, dadurch gekennzeichnet, daß das Sperrmittel (13) ein Ring auf der unteren Oberfläche (14) des Linsenelements (10) ist.

11. Einrichtung nach einem der vorhergehenden Ansprüche, dadurch gekennzeichnet, daß die Lichtquelle (1) ein Laser ist.

12. Verfahren zur Ausrichtung der Achse der Lichtleitfaser mit der optischen Achse einer Einrichtung nach einem der vorhergehenden Ansprüche, dadurch gekennzeichnet, daß durch die Lichtleitfaser (11) gebrochenes Licht, das durch das ringförmige Linsenelement (10) vom Freiraumloch aus und durch die zylindrische konvexe Außenfläche (15) des ringförmigen Linsenelements (10) gebrochen wird, durch Erfassungsmittel (25) in mehr als einer Richtung erfaßt wird.

## Revendications

1. Appareil pour déterminer le profil d'indice d'une fibre optique (11) comprenant une source (1) de lumière et un détecteur (12) de lumière, un système optique (3, 4, 5, 6) pour focaliser un faisceau lumineux provenant de la source (1) de lumière, un moyen (20) pour maintenir la surface terminale de la fibre optique (11) perpendiculaire au faisceau lumineux et au niveau du point de focalisation de celui-ci, la surface terminale de la fibre optique (11) étant dans une cellule (7), un élément de lentille (10) entre la cellule (7) et le détecteur (12) de lumière, un moyen (13) de blocage de la lumière de fuite placé entre la cellule (7) et le détecteur (12) de lumière et un moyen pour permettre de faire balayer la surface terminale de la fibre optique (11) devant le point de focalisation du faisceau lumineux,
**caractérisé** en ce que l'élément de lentille est un élément de lentille toroïdal (10) de forme cylindrique, avec un trou vide le long de son axe, le faisceau lumineux traversant l'élément de lentille toroïdal (10) en cours d'utilisation grâce au processus de réflexion interne totale, au niveau de sa surface extérieure (15) cylindrique convexe.

2. Appareil pour déterminer le profil d'indice d'une fibre optique (11) comprenant une source (1) de lumière et un détecteur (12) de lumière, un système optique (3, 4, 5, 6) pour focaliser un faisceau lumineux provenant de la source (1) de lumière, un moyen (20) pour maintenir la surface terminale de la fibre optique (11) perpendiculaire au faisceau lumineux et au niveau du point de focalisation de celui-ci, la surface terminale de la fibre optique (11) étant dans une cellule (7), un élément de lentille (10) entre la cellule (7) et le détecteur (12) de lumière, un moyen (13) de blocage de la lumière de fuite placé entre la cellule (7) et le détecteur (12) de lumière et un moyen pour permettre de faire balayer la surface terminale de la fibre optique (11) devant le point de focalisation du faisceau lumineux,
**caractérisé** en ce que l'élément de lentille est un élément de lentille toroïdal (10) de forme cylindrique, avec un trou vide le long de son axe et un revêtement réfléchissant sur sa surface extérieure (15) cylindrique convexe.

3. Appareil selon la revendication 2, dans lequel l'élément de lentille toroïdal (10) comprend une ou plusieurs fenêtres dans son revêtement réfléchissant.

4. Appareil selon la revendication 1, la revendication 2 ou la revendication 3, dans lequel l'élément de lentille toroïdal (10) a des surfaces supérieure (16) et inférieure (14) qui sont courbées de façon appropriée pour recueillir et focaliser un anneau de lumière sur le détecteur (12).

5. Appareil selon l'une quelconque des précédentes revendications, dans lequel la cellule (7) est sensiblement hémisphérique.

6. Appareil selon l'une quelconque des précédentes revendications, dans lequel la cellule (7) contient un fluide d'adaptation d'indice.

7. Appareil selon l'une quelconque des précédentes revendications, dans lequel le dessous de la cellule (7) est fermé par une fenêtre (17) transparente et mince.

8. Appareil selon l'une quelconque des précédentes revendications, dans lequel le moyen de maintien (20) inclut une virole de précision qui peut être introduite dans la cellule (7) par un entonnoir (8).

9. Appareil selon l'une quelconque des précédentes revendications, dans lequel le moyen de blocage (13) est un diaphragme à iris placé entre l'élément de lentille (10) et le détecteur de lumière.

10. Appareil selon l'une quelconque des précédentes revendications 1 à 8, dans lequel le moyen de blocage (13) est une bague annulaire sur la surface inférieure (14) de l'élément de lentille (10).

11. Appareil selon l'une quelconque des précédentes revendications, dans lequel la source (1) de lumière est un laser.

12. Procédé pour aligner l'axe d'une fibre optique avec l'axe optique d'un appareil conforme à l'une quelconque des précédentes revendications, dans lequel de la lumière réfractée par la fibre optique (11), qui est réfractée à travers l'élément de lentille toroïdal (10) depuis le trou vide et à travers la surface extérieure (15) cylindrique convexe de l'élément de lentille toroïdal (10), est détectée par un moyen de détection (25) dans plus d'une direction.
